# EUROPÄISCHE PATENTSCHRIFT

(11) **EP 0 753 335 B1**
(45) Veröffentlichungstag und Bekanntmachung des Hinweises auf die Patenterteilung: **29.08.2001**
(21) Anmeldenummer: 96110941.0
(22) Anmeldetag: 06.07.1996
(51) Int. Cl.: B01D 53/56

(54) **Verfahren zur Reduzierung des Schadstoffgehaltes von Abgasen aus der Zementherstellung**
Process for reducing the pollution level of exhaust gases from cement manufacturing
Procédé pour la réduction du niveau de pollution de gaz d'échappement de la fabrication du ciment

(30) Priorität: 14.07.1995 DE 19525655
(43) Veröffentlichungstag der Anmeldung: 15.01.1997
(73) Patentinhaber: Bruns, Karl-Heinz, 46483 Wesel (DE); Köhnk, Diethelm, 44534 Lünen (DE)
(72) Erfinder: Bruns, Karl-Heinz, 46483 Wesel (DE); Köhnk, Diethelm, 44534 Lünen (DE)
(74) Vertreter: Röther, Peter, Dipl.-Phys.

(56) Entgegenhaltungen:
- EP-A- 0 199 023
- EP-A- 0 202 664
- EP-A- 0 326 943
- EP-A- 0 426 215
- EP-A- 0 434 107
- WO-A-90/05000
- GB-A- 1 513 493
- US-A- 3 635 657

## Beschreibung

Die Erfindung betrifft ein Verfahren zur Behandlung von gasförmigen und festen Reaktionsprodukten aus der Zementindustrie, insbesondere zur Reduzierung des Schadstoffgehaltes von Stäuben aus NOₓ-haltigen Abgasen.

Bei der Zementherstellung werden kalk- und tonmineralhaltige Rohstoffe, ggf. unter Zusatz von Quarzsand fein gemahlen und vermischt und danach in einem Drehrohrofen bei Temperaturen von 1400°C bis 1500°C gebrannt. Die dabei anfallenden gasförmigen Reaktionsprodukte sind sehr staubhaltig (bis 2 kg/Nm³ Feststoff im Durchschnitt 700 g/Nm³ Feststoff) und enthalten je nach eingesetztem Brennstoff mehr oder weniger große Mengen an Stickstoffoxiden, die aus Umweltschutzgründen nicht direkt in die Umwelt abgegeben werden dürfen.

Zwar sind verschiedene Verfahren zur Reduzierung des Gehaltes von Stickstoffoxiden unter Einbringung eines stickstoffoxidreduzierenden Stoffes bekannt. Diese beruhen jedoch auf einer Umsetzung des Stickstoffmonoxids mit Ammoniak, der bei zu hohen Temperaturen (> 1000°C) verbrennt und bei zu tiefen Temperaturen (< 800°C) weitgehend im Rauchgas verbleibt, so daß ein Ammoniak-Schlupf auftritt.

Eine Weiterentwicklung des bekannten SNCR-Verfahrens besteht laut DE-OS 37 30 141 (Jürgen Wolfrum) darin, daß den heißen Verbrennungsgasen im Bereich von 650°C bis 1500°C neben dem Reduktionsmittel (Ammoniak) ein Zusatzstoff in Form von SO₂ und SO₃ zur Minimierung der nach Anwendung des SNCR-Verfahrens verbliebenen CO- sowie NH₃-Mengen eingeleitet wird. Da Ammoniak jedoch mit Schwefeloxiden und auch Stickoxiden zu unerwünschten Ablagerungen an kalten Stellen der Anlage führen kann, sind diesem Verfahren enge Grenzen gesetzt. Bei stark staubhaltigen Abgasen besteht auch die Gefahr, daß sich derartige Ablagerungen über den Staub in der Umgebung verteilen.

Ein anderes Verfahren zur gleichzeitigen Reduzierung des Gehaltes von Stickoxiden und PCDD sowie PCDF in Abgasen aus Brennstoffen wird in der DE 40 27 819 (Noell - K + K Abfalltechnik GmbH) beschrieben. Hierbei soll die PCDD- bzw. PCDF-Entstehung durch Einbringung des stickstoffoxidreduzierenden Stoffes im unteren Bereich des zur Reduktion des Stickstoffoxids geeigneten Temperaturintervalls erfolgen und dann nach einer guten Durchmischung des Abgases und Anlagerung einer Inhibitor-Substanz an den Flugaschepartikeln der Stofftransport bis zur Abkühlung in den für die PCDD/PCDF-Bildung kritischen Bereich bis hinunter zu Temperaturen von ca. 400°C erfolgen. Dieses Verfahren hat sich jedoch in der praktischen Anwendung als nicht unter allen Umständen sichere Verfahrensweise zur Reduzierung der PCDD/PCDF-Gehalte erwiesen, da der auf der Flugasche abgelagerte Ammoniak bei den herrschenden Temperaturen einer thermischen Zersetzung unterliegt, so daß nicht immer ausreichende Mengen von Ammoniak für die in die PCDD/PCDF-Bildung kritische Zone gelangen. Auch war die Steuerung des Ammoniakgehaltes nicht einfach, so daß im umgekehrten Falle bei Ammoniaküberschuß der eingangs beschriebene NH₃-Schlupf eintrat.

In der EP 0 426 215 A1 sind ein Verfahren und eine Vorrichtung zur Reinigung von Rauchgas oder anderen Abgasen aus Heizkesseln und anderen industriellen Verbrennungsanlagen beschrieben, bei denen Waschflüssigkeiten mit hohem Reduktionsvermögen, u.a. solche, die Stickstoff- und/oder Schwefel- und/oder Schwermetallverbindungen enthalten und die beispielsweise aus Entwickler- und Fixierbädern der Photoindustrie gewinnbar sind, in diese Abgase eingedüst werden. Dabei werden die Abgase in einer ersten, nicht im Detail beschriebenen Gaswäsche auf 100° C abgekühlt und vorgereinigt, anschließend einer Gas- und Waschflüssigkeits-Trennstufe aufgegeben und dann einer Kolonne weiterer Reinigungsstufen zugeführt, in denen jeweils mittels einer in der Symmetrieachse jeder Reinigungsstufe in Strahlrichtung des Gases angeordneten Venturi-Düse Waschflüssigkeit in den Abgasstrom eingeblasen wird und der Abgasstrom seinerseits mindestens einen - offensichtlich siebartigen - Tropfenfänger und in weiteren Stufen jeweils noch einen nur mittig über der jeweiligen Venturi-Düse offenen und mit dieser eine weitere venturiartige Anordnung ausbildenden Ablaufkegel für heruntertropfende Waschflüssigkeit passieren muß. Die Waschflüssigkeit jeder Reinigungsstufe wird dann separat gesammelt, wieder aufbereitet und erneut in den Abgasstrom eingeblasen. Mit diesem Verfahren und der zugehörigen Vorrichtung können jedoch nur Abgase mit geringer Staubbeladung behandelt werden, da anderenfalls in jeder Reinigungsstufe Anbackungen und Verstopfungen in der Gas-Waschflüssigkeits-Trennstufe und in den Öffnungen der Tropfenfänger und Ablaufkegel zu erwarten sind - jedenfalls dann, wenn die Abgase mit den hohen Staubbelastungen der Zementherstellung von > 500 g/Nm³ beladen sind. Darüber hinaus gibt die in Rede stehende Druckschrift keinen Hinweis auf die Erzeugung eines innigen Kontaktes zwischen Abgas und Waschflüssigkeit, insbesondere bei Reaktionstemperaturen im Bereich von 1050° C.

In der EP 0 326 943 A2 und der WO 90/05000, die sich im wesentlichen dadurch unterscheiden, daß in der WO 90/05000 zusätzlich eine ausführliche Darstellung einer für das Einblasen eines flüssigen Reaktionsmittels mit einem Trägergas geeigneten Düsenanordnung gegeben wird, wird im Rahmen eines zweistufigen Gasreinigungsverfahrens, bei dem der gewünschte Effekt durch Einblasen unterschiedlicher Reaktionsmittel in unterschiedlichen Temperaturbereichen des Abgaskanals und anschließende Gaswäsche erreicht wird, die Erzeugung eines intensiven Kontaktes zwischen eingeblasenem Reaktionsmittel und Abgasstrom durch Erzeugung eines Drallstromes im Abgasstrom vorgeschlagen. Hier fehlt aber jeglicher Hinweis auf die Anwendbarkeit des beschriebenen Verfahrens auf Abgase mit hoher Staubbelastung, wie sie bei der Zementherstellung zu erwarten ist. Vielmehr wird die künstliche Zugabe von Flugasche mit einer Belastung des Abgases von 7 g/Nm³ bereits als Maximum angesehen, so daß der Fachmann von einer Anwendung der Drallströmung auf Abgase mit hoher Staubbelastung eher abgehalten als dazu animiert wird.

Aufgabe der vorliegenden Erfindung ist es, die Reaktionsprodukte aus der Zementherstellung mit Feststoffgehalten über 500 g/Nm³ so zu behandeln, daß sie von allen Schadstoffen einschließlich der NOₓ-beladenen Reaktionsgase in zuverlässiger Weise gereinigt und dabei die eingangs beschriebenen Nachteile der bekannten Verfahren vermieden werden.

Diese Aufgabe wird erfindungsgemäß durch die in den Patentansprüchen angegebenen Merkmale gelöst.

Es hat sich gezeigt, daß sich durch eine spezielle Eindüsung des salzhaltigen Reaktionsmittels bei Temperaturen über 1050° eine hohe Eindringtiefe und gute Durchmischung der in den Reaktionsgasen enthaltenen Schadstoffe erzielen läßt, wobei sich aus dem Reaktionsmittel Salzkristalle bilden. Durch die anschließende Zersetzung der Salzkristalle gelingt eine vollständige Radikalbildung des eingesetzten Reaktionsmittels innerhalb weniger Bruchteile einer Sekunde. Dabei sind folgende Verfahrensbedingungen von Vorteil:
1. die Gesamtmenge der Ammoniumsalze im Reaktionsmittel soll vor der Eindüsung zwischen 2 und 12 Gew.-% liegen;
2. die Menge an Hydrochinon soll 2 bis 10 Gew.-% betragen;
3. bei Erzeugung einer Drallströmung durch gegenläufige Eindüsung kann die Durchmischung des feststoffhaltigen Abgases mit den Salzkristallen erheblich verbessert werden.

Im folgenden wird die Erfindung anhand mehrerer Beispiele näher erläutert, wobei die Versuche Nr. 1 - 3 mit unterschiedlichen Reaktionsmitteln und mit einer Eindüsung quer zur Strömungsrichtung erfolgte und die Eindüsung bei T₁ = 950°C
T₂ = 1050°C
T₃ = 1080°C
vorgenommen wurde. Das wässrige Reaktionsmittel bestand aus
1) Ammoniak mit 25 %
2) Ammoniumsalz mit 12 %
3) Ammoniumsalz wie 2) + Hydroxichinon mit 8 %.

Zum Vergleich wurden die Versuche Nr. 2 und 3 mit einer Drallströmung wiederholt.

Die Auswirkungen der unterschiedlichen Verfahren auf die NOₓ-Reduzierung in den Reaktionsgasen eines Zementdrehrohrofens zeigen die Spalten D + E. In allen Versuchen lag der Feststoffgehalt des Reaktionsgases zwischen 650 und 720 g/Nm³.

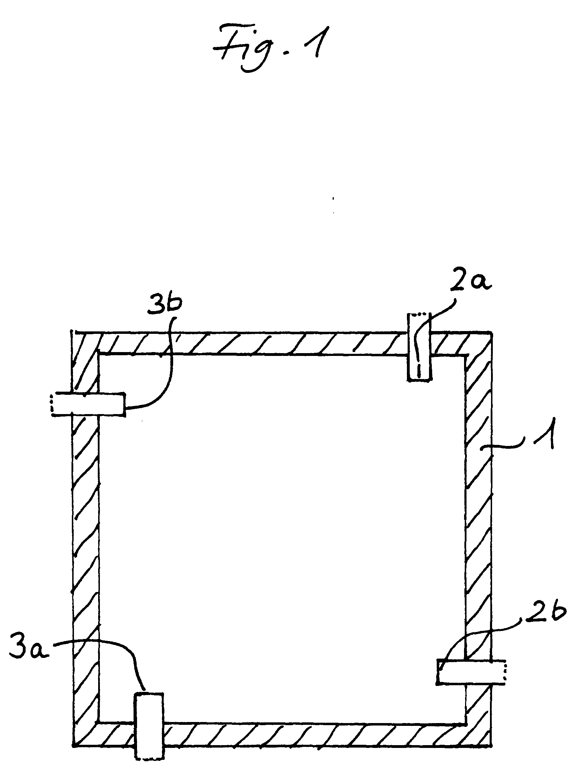

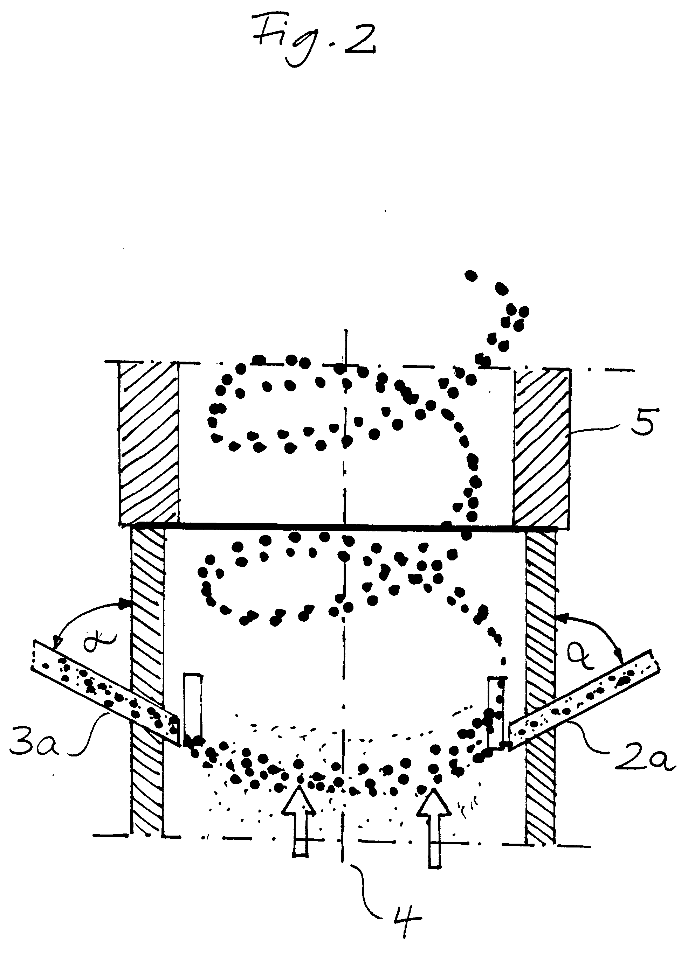

Eine Vorrichtung zur Durchführung des Verfahrens zur Behandlung von gasförmigen und festen Reaktionsprodukten ist in den Figuren 1 und 2 als Prinzipbild dargestellt.

Figur 1 zeigt das Ende eines Reaktionsrohres 1 für die Zementherstellung, bei dem jeweils zwei entgegengesetzt gerichtete Ausströmöffnungen 2a, 3a bzw. 2b, 3b angeordnet sind.

Wie Figur 2 veranschaulicht, sind die Ausströmöffnungen 2a, 3a in einem Winkel α zur Rohrachse 4 geneigt.

Durch Versuche ist festgestellt worden, daß bei den in der Zementherstellung anfallenden Reaktionsgasen ein Anstellwinkel zwischen 45 und 60° von Vorteil ist. Unter diesem Anstellwinkel erreicht die Durchmischung der sehr feststoffhaltigen Reaktionsgase ein Optimum.

Da die Ausströmöffnungen entgegengesetzt zur Strömungsrichtung der Reaktionsgase (in Figur 2 in Pfeilrichtung) verlaufen, entsteht eine Drallströmung wie in Figur 2 schematisch angedeutet. Dadurch wird die Durchmischung und Reaktionsfähigkeit der Reaktionsstoffe verbessert, so daß eine vollständige Radikalbildung der eingesetzten Ammoniumsalze innerhalb weniger Bruchteile einer Sekunde stattfindet.

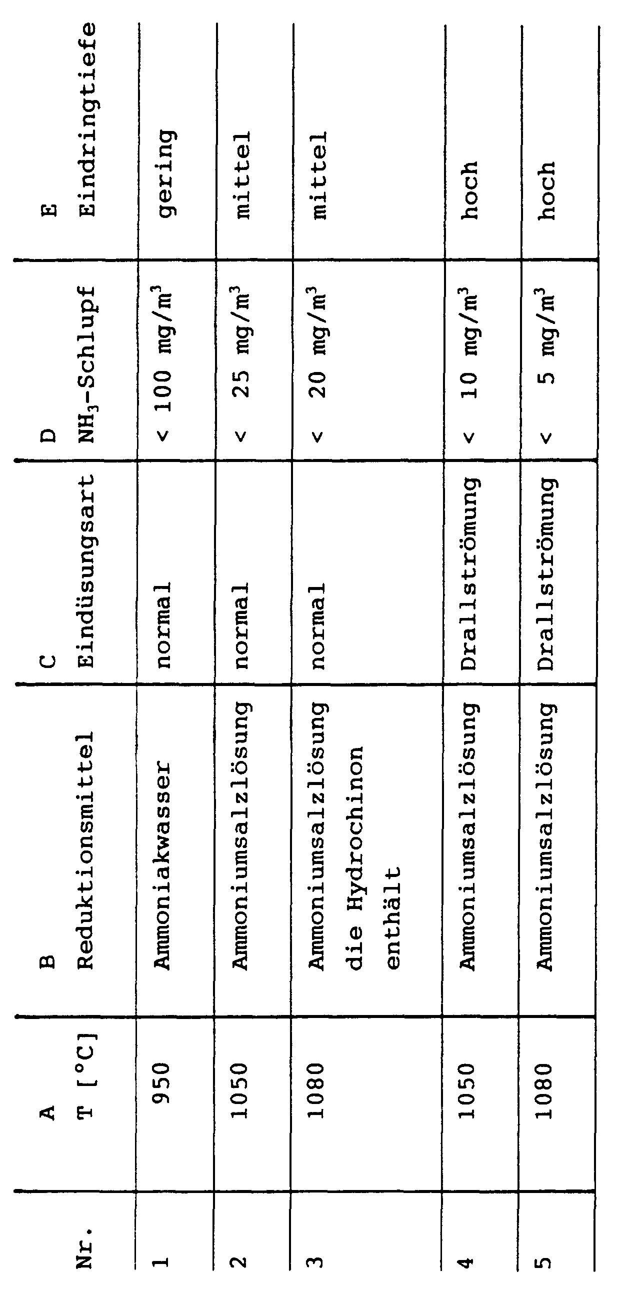

## Patentansprüche

1. Verfahren zur Behandlung von gasförmigen und festen Reaktionsprodukten aus der Zementindustrie, insbesondere zur Reduzierung des Schadstoffgehaltes von Stäuben aus NOₓ-haltigen Abgasen,
**dadurch gekennzeichnet**,
daß am Ende eines Reaktionsrohres (1) für die Zementherstellung mittels mindestens zweier Ausströmöffnungen (2a, 3a bzw. 2b, 3b) von Düsenkörpern ein Reaktionsmittel in Form einer ammoniumsalzhaltigen, wässrigen Lösung bei einer Temperatur von oberhalb 1050° C mit den Reaktionsprodukten der Zementherstellung in Kontakt gebracht wird,
wobei der Gehalt an Ammoniumsalzen zwischen 2 und 12 Gew.-% und der Feststoffgehalt der staubhaltigen Abgase 500 - 1500 g/Nm³ beträgt und
wobei die Düsenkörper quer zur Rohrachse (4) derart angeordnet sind und in Längsebenen des Reaktionsrohres (1) liegen, in denen sie in einem Winkel α entgegen dem Abgasstrom geneigt sind, daß die Symmetrieachsen ihrer Sprühkegel jeweils in vorgegebenem Abstand und mit jeweils gleicher Händigkeit an der Rohrachse (4) vorbeiführen, so daß im Abgasstrom eine Drallströmung mit vorgegebenem Drehsinn erzeugt wird.

2. Verfahren nach Anspruch 1,
**dadurch gekennzeichnet**,
daß dem Reaktionsmittel Hydrochinon in einer Menge von 2 - 10 % zugesetzt wird.

3. Verfahren nach einem der vorhergehenden Ansprüche,
**dadurch gekennzeichnet**,
daß als Reaktionsmittel ammoniumthiosulfat-haltige Entwickler- und Fixierbäder mit der vorgenannten Konzentration eingedüst werden.

4. Verfahren nach einem der vorhergehenden Ansprüche,
**dadurch gekennzeichnet**,
daß der Winkel α der Ausströmöffnungen (2a, 3a bzw. 2b, 3b) im Bereich zwischen 45° und 60° gewählt wird.

## Claims

1. A process for treating gaseous and solid reaction products from the cement industry, in particular for reducing the contaminant content of dusts from NOₓ-containing waste gases, **characterised in that**, at the end of a reaction tube (1) for manufacturing cement, by means of at least two discharge openings (2a, 3a and 2b, 3b) of nozzle bodies and at a temperature higher than 1050° C, a reaction agent in the form of an ammonium-salt-containing aqueous solution is brought into contact with the reaction products from manufacturing the cement, the ammonium-salt content being between 2 and 12% by wt. and the solid content of the dust-containing waste gases being 500 - 1500 g/Nm³, and the nozzle bodies being arranged transversely with respect to the tube axis (4) and lying in longitudinal planes of the reaction tube (1), in which they are inclined at an angle α away from the waste-gas flow, such that the axes of symmetry of their spray cones each lead past the tube axis (4) at a predetermined spacing and with the same handedness, so that a swirling flow having a predetermined sense of rotation is generated in the waste-gas flow.

2. A process according to Claim 1, **characterised in that** a quantity of 2 - 10 % hydroquinone is added to the reaction agent.

3. A process according to one of the preceding claims, **characterised in that** developing and fixing baths containing ammonium thiosulphate and having the above-mentioned concentration are sprayed in as reaction agents.

4. A process according to one of the preceding claims, **characterised in that** the angle α of the discharge openings (2a, 3a and 2b, 3b) is selected to be in the range between 45° and 60°.

## Revendications

1. Procédé de traitement de produits réactionnels gazeux et solides, provenant de l'industrie cimentière, notamment en vue de réduire la teneur en substances nocives de poussières d'effluents gazeux contenant NOₓ,
**caractérisé**
**en ce qu**'à l'extrémité d'un tube de réaction (1), pour la fabrication de ciment au moyen d'au moins deux ouvertures d'écoulement (2a, 3a, respectivement 2b, 3b) de corps de buse, un produit réactionnel, sous la forme d'une solution aqueuse contenant des sels d'ammonium, à une température supérieure à 1 050 °C, est amené en contact avec les produits réactionnels de la fabrication du ciment,
la teneur en sels d'ammonium étant comprise entre 2 et 12 % en poids et la teneur en matières solides des effluents gazeux contenant des poussières étant comprise entre 500 et 1 500 g/Nm³ et
les corps de buse étant disposés transversalement à l'axe (4) du tube et se situant dans des plans longitudinaux du tube de réaction (1), dans lesquels ils sont inclinés selon un angle α dans le sens contraire au courant des effluents gazeux, de manière que les axes de symétrie de leur cône de pulvérisation passent devant l'axe (4) du tube, toujours à distance donnée et toujours à même main, de sorte qu'il est produit dans le courant des effluents gazeux, un écoulement giratoire avec sens de rotation donné.

2. Procédé selon la revendication 1,
**caractérisé**
**en ce que** de l'hydroquinone est ajoutée à raison de 2 à 10 % au produit réactionnel.

3. Procédé selon l'une des revendications précédentes,
**caractérisé**
**en ce qu**'on pulvérise comme produit réactionnel des bains de développement et de fixage, contenant des thiosulfates d'ammonium, dans la concentration précitée.

4. Procédé selon l'une des revendications précédentes,
**caractérisé**
**en ce que** l'angle α des ouvertures d'écoulement (2a, 3a, respectivement 2b, 3b) est choisi entre 45° et 60°.
